# EUROPEAN PATENT SPECIFICATION

(11) **EP 3 183 452 B1**
(45) Date of publication and mention of the grant of the patent: **05.12.2018**
(21) Application number: 15766890.6
(22) Date of filing: 13.08.2015
(51) Int. Cl.: F03B 13/22, F03B 13/20

(54) **ROTOR FOR A WAVE POWER PLANT**
ROTOR FÜR EINE WELLENKRAFTWERK
ROTOR POUR UNE CENTRALE HOULOMOTRICE

(30) Priority: 19.08.2014 FI 20145731
(43) Date of publication of application: 28.06.2017
(73) Proprietor: Wello Oy, 02270 Espoo (FI)
(72) Inventor: PAAKKINEN, Heikki, FI-02270 Espoo (FI)
(74) Representative: LEITZINGER OY
(86) International application number: PCT/FI2015/050526
(87) International publication number: WO 2016/027004

(56) References cited:
- WO-A1-2010/034888
- FR-A1- 2 941 016
- GB-A- 2 483 270
- US-B1- 8 359 855

## Description

The invention relates to a wave power plant rotor, which is mountable for rotation around a float's vertical shaft or which has its vertical center axle rotatably bearing-mounted on the float.

### Background technology

Efforts have been made in various parts of the world to develop equipment with a capability of turning the kinetic energy of ocean waves into electrical energy. In these wave power plants, the movement of waves sets the apparatus or a component thereof in motion which is converted into electrical energy. One prior known approach is a device floating on water, comprising a rotor which is rotated by waves and from where the rotational motion is transmitted to a generator.

Also known are wave power plants with another way of exploiting the kinetic energy of waves for putting a rotor in rotational motion. In these power plants, the waves are rocking a body member floating on water and having a rotator rotatably mounted on its vertical shaft. The rocking motion of the body member induces a rotational motion of the rotator around the vertical shaft.

This type of wave power plant is known from Patent publication WO2008/119881. In this case, the wave power plant comprises a body member floating on water, which may consist of one or several, for example three components. The body member is designed in such a shape and disposed in such a manner relative to the propagation direction of waves that the body member is set in gyrating motion by the buoyancy of waves. The body member has its vertical shaft provided with a bearing-mounted rotator, which includes an arm and a large mass at its outermost end. When the body member inclines in response to the buoyancy of waves, the rotator commences to rotate around the vertical shaft as a result of gravity. The device is raised by a wave for example at three points, whereby the weight receives a new momentum three times over the course of a full circle.

In order to enable this prior known wave power plant to produce a sufficient output in favorable conditions, the rotator along with its weight must be sufficiently heavy and large in terms of its diameter. A large and heavy rotator is nevertheless problematic in small and irregular waves. Due to a high moment of inertia, it is difficult to set the rotator in motion and hence it does not function in small waves. As a result of the rotator's weight, the device may remain in a position inclined to the side where the rotator's weight is located and, therefore, it is even more difficult to activate. Even though the publication WO2008/119881 presents a possibility of adjusting the rotator in terms of its radius, the situation will be just slightly improved.

Body members floating with gyrating motion have also been disclosed in publications WO2010/034888 and WO 2014/001627. In this disclosure, the gyrating motion refers to such a floating of the body member as a result of which the inclining direction of the rotator's or rotor's vertical rotation axle revolves around a theoretical vertical axis, whereby the rotator's or rotor's trajectory generates a cone whose cross-section may be other than a circular shape.

Publication FR 2941016 A1 discloses a wave power plant, including a rotor which is mountable for rotation around a float's vertical shaft or which has its vertical center axle rotatably bearing-mounted on the float. The rotor is provided with substantially vertical or inclined blades set at peripheral intervals and having what in radial direction are their innermost edges spaced from the rotor's center axle, and the blades are oriented in such a way that the rotor is set in rotational motion by forces which are generated by the flow of liquid and the gravity of liquid in the rotor and which are working towards the blades. The rotating rotor is surrounded by a non-rotatable housing which contains a liquid. The flow of liquid in the housing produces friction losses, which undermines performance and restricts the use of liquids with a higher viscosity.

US 8 359 855 B1 discloses an apparatus for converting the motion of waves or sea swells into mechanical motion and then into usable energy. The apparatus comprises a floating base and a housing containing liquid. Central point of the floating base is connected to a central point of the housing by a ball and socket which creates a gap between the floating base and the central point of the housing, thereby allowing the housing to pivot and rotate around the ball and socket to contact energy collectors positioned on the floating base in a 360 degree arc. The energy collection from several separate energy collectors is difficult to implement.

### Object of the invention

It is an object of the invention to provide a rotor, which is rotatably mounted with bearings on a body member floating on water especially by way of gyrating, and by means of which the foregoing prior art problems can be obviated. Specifically, it is an object to provide a wave power plant rotor, which is easy to activate and which sustains rotational motion even in small waves. Therefore, what is exploited in a rotor of the invention for activating and maintaining a rotational motion is not a fixed mass of the rotor but instead, in a manner more effective than before, the weight of a liquid flowing in the rotor.

### Summary of the invention

The invention relates to a wave power plant rotor, which is mountable for rotation around a float's vertical shaft or which has its vertical center axle rotatably bearing-mounted on the float. Thus, the rotor can be bearing-mounted rotatably on a fixed shaft or else the rotor can be fixedly attached to a shaft which is rotatable on bearings. The rotor according to the invention comprises substantially vertical or inclined blades arranged at peripheral intervals and having what in radial direction are their innermost edges spaced from a center axle of the rotor. The blades have such an orientation that the rotor is set in rotational motion by forces which are generated by the flow of liquid and the gravity of liquid in the rotor and which are working perpendicularly towards the blades. The rotor is surrounded by a housing which contains a liquid. In a rotor according to the invention, the housing is attached fixedly to the rotor for enabling the housing to rotate along with the rotor and the blades. The characterizing features of the invention are presented in the appended claim 1. Preferred embodiments of the invention are presented in dependent claims.

The liquid contained in the rotor housing is allowed to flow between the blades primarily in a radial fashion, but only in a limited manner or not at all circumferentially past the blades. Just some of the housing volume, typically 30-50%, preferably about 35-45% of the volume, is filled with liquid. Hence, with the rotor in an inclined position, all or nearly all of the liquid may be present essentially on one side of the rotor's center axle.
According to one preferred embodiment, the vertical blades included in a rotor of the invention are set in radial orientation. It is possible to arrange the vertical blades at regular intervals. Additionally, in one embodiment, the blades are arranged at an angle relative to radial direction, or in an inclined position relative to the vertical plane, or the blades are directed past the center axle.

Moreover, the rotor blades can be curvilinear in terms of the edges or cross-sections thereof. It is also possible that the blades be provided with openings or that the rotor's center axle has at least one additional blade movably mounted thereon.

From the rotor's axle it is provided a power take-off for a generator. One option in a rotor of the invention is that the housing has a cylindrical shape. The housing can also have a lid and/or bottom in a convex or concave shape.
The liquid in rotor can be water or glycol or liquid slurry of clay or peat. Clay increases the specific weight and viscosity of liquid. Peat increases viscosity. Other blend components can also be used for increasing weight and viscosity.
In a rotor of the invention, the rotor has a ratio of its height h to its diameter D in the range of 1:5-1:25, preferably less than 1:10. This ratio applies to one rotor unit, which comprises a closed housing and several of which can be on top of each other. This ratio ensures that, with a typical inclination angle of 5 degrees, the liquid shifts onto one side of the rotor's center axle with a 40% degree of fullness in the housing.
The rotor according to the invention offers significant benefits over rotators of the prior art employed in wave power plants. The principal advantages include easy actuation, a smoother torque in comparison with a fixed mass rotator, and more reliable operation in small waves.

### List of figures

- Fig. 1a: shows one exemplary embodiment for a wave power plant rotor of the invention in a plan view;
- Fig. 1b: shows the wave power plant rotor of fig. 1a in a section taken along a line 1b-1b in fig. 1a;
- Fig. 1c: shows a wave power plant rotor according to a second embodiment of the invention in a plan view;
- Fig. 2: shows one exemplary embodiment for a wave power plant rotor of the invention in a side view;
- Fig. 3a: shows one exemplary embodiment for a wave power plant rotor of the invention in a perspective view;
- Fig. 3b: shows one exemplary embodiment for a wave power plant rotor of the invention in a side view;
- Fig. 3c: shows a wave power plant rotor of the invention in a section along a line IIIc-IIIc in fig. 3b;
- Fig. 4: shows one exemplary embodiment for a wave power plant rotor of the invention when installed in a wave power plant;
- Figs. 5-7: show one exemplary embodiment for a multi-tiered rotor in side, plan and perspective views.
- Figs. 8 ja 9: show still one exemplary embodiment for a rotor of the invention in a plan view and in a perspective view, with a lid removed.

### Detailed description of the invention

The wave power plant rotor of the invention is preferably used in a type of wave power plant, wherein the waves generate a gyrating motion for a body floating on water and for a vertical center shaft mounted thereon. Body options for such a wave power plant have been presented for example in publications WO2008/119881, WO2010/034888 and WO2014/001627. A rotor of the invention can be substituted for a wave power plant rotator described in the cited publications. Once a rotor is mounted on the vertical shaft of a wave power plant, the rotor will also be set in gyrating motion.

In a wave power plant rotor of the invention, use is made of the weight and/or flow of liquid generated by a gyrating motion. The forces of liquid weight and/or flow working against the rotor blades bring about a rotational motion of the rotor. According to the invention, the rotor is surrounded by a housing which contains this liquid. The housing is fixedly mounted on the rotor, thus rotating along with the rotor. The liquid contained in the housing can be water or water slurry blended with solids. In a heavier swell, it may be beneficial for the liquid to have a higher viscosity. Thus, use can be made e.g. of glycol, liquid clay slurry, or liquid peat slurry. Likewise, salt increases the specific weight and lowers the freezing temperature. In addition, the higher specific weight of liquid enables a smaller structure.

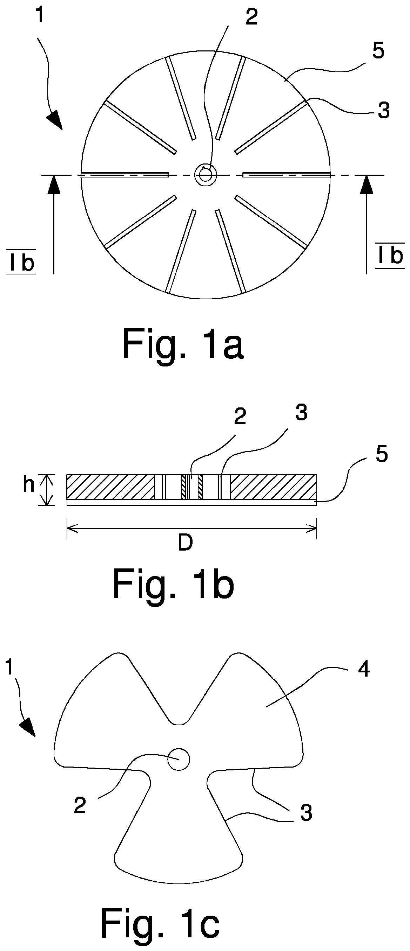

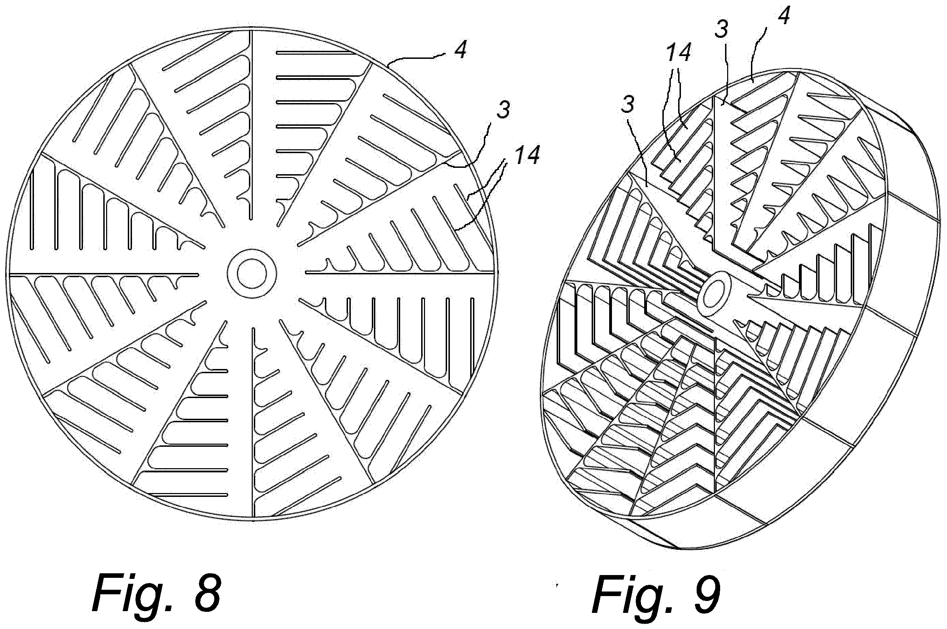

In fig. 1a is shown a wave power plant rotor according to one embodiment of the invention in a plan view. In this embodiment is shown a rotor 1, which is provided with an underlying disc-shaped plate 5 to which are fastened vertical blades 3 extending in radial direction. In this case, the blades 3 are set at regular intervals. The blades 3 can be arranged in a peripheral direction of the rotor at intervals of e.g. 5-45°. Preferably, the blades are set at intervals of 20-30°. The closer the spacing in compartmentalization, the larger amount of liquid is possible, especially if the blades come in multiple forms as in the exemplary embodiments of figs. 9 and 10. In the middle of the rotor 1 is a center axle 2, which is adapted to enable mounting of the rotor on a vertical shaft of the wave power plant.

Fig. 1b shows the same rotor embodiment in a section view. The rotor has diameter D and a height h. The figure shows in the middle the rotor's center axle 2, as well as radially disposed blades 3 mounted on a disc-shaped plate 5.
In this case, the disc-shaped plate 5, to which the blades 3 are attached, is located underneath the blades. However, the disc-shaped plate 5 may also be located above the rotor blades or in the middle thereof. It may extend in radial direction over a distance equal to, surpassing, or falling short of the blades. The disc-shaped plate 5 can also be designed in a concave or convex shape, enabling to make a difference in the flowing of water in the rotor and in the rotor stability.
A slightly concave or convex design of the disc-shaped plate 5, a deviation of e.g. 1-10°, preferably 4-6°, from a flat plane, can be used to make a difference in the above-described characteristics.

The rotor components displayed in figs. 1a and 1b are about to be surrounded by a housing (not shown), which is fixedly connected with the blades 3, encloses a liquid therein and rotates with the blades 3.

Fig. 1c shows an optional embodiment, wherein the rotor 1 has its housing 4 divided into three circumferentially discrete compartments merging with each other in a middle area of the rotor around the center axle 2. Side walls of the compartments make up the blades 3 which are influenced by the liquid with its gravity for generating a rotational motion of the rotor. In this case, the blades 3 and the housing 4 are fixedly connected with each other and both rotate around the center axle. The circumferential width or central angle of compartments, as well as the number thereof, may vary.

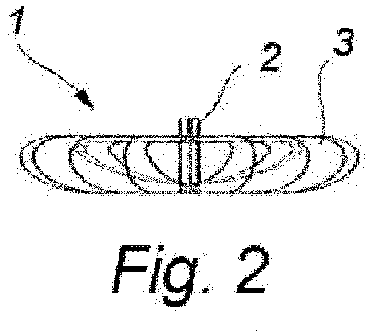

Fig. 2 shows an embodiment for a rotor 1 of the invention, wherein the blades 3 are constructed in curvilinear shapes and attached by the inner ends thereof to the center axle 2, whereby in the middle of each blade at a top edge is left an opening that allows the liquid to flow through. Around the outer edges of the blades is mounted a housing (not shown), which contains a liquid and rotates along with the blades.

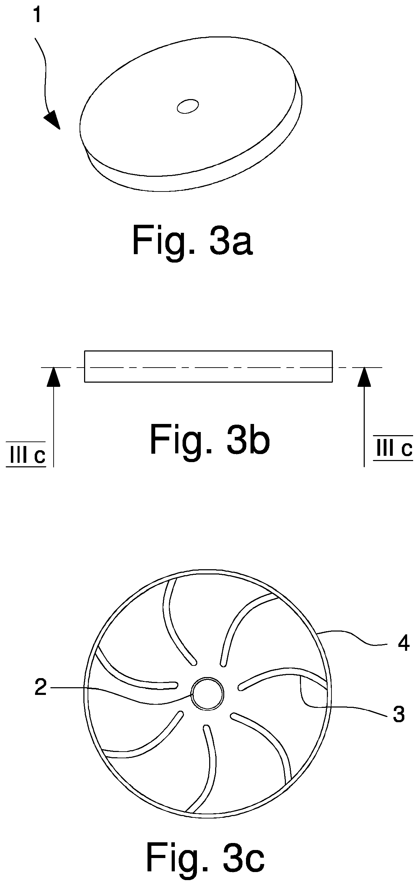

In figs. 3a-3c is shown a second embodiment for a rotor 1 of the invention, wherein the entire rotor assembly is covered by a fixedly constructed housing 4. Fig. 3c shows such a rotor 1 in cross-section. In this case, the blades 3 are constructed in curvilinear shapes. The design of blades 3, or the inclination thereof either relative to vertical plane or relative to radial direction, can be used in an effort to enhance the effect of flowing water on promoting rotational motion of the rotor 1, especially at the discontinuation point of a wave as the liquid changes sides across the middle area. The blades 3 are here attached both at the top, bottom and at the outermost ends thereof to the cylinder-shaped housing 4. The housing 4 can be laminated to rest on the blades or else it can be implemented in some other way. One option is to construct the housing from stainless steel and to fasten it to rotor blades for example by welding.

In view of optimizing the flow of liquid, the rotor can be constructed in such a way that the blades-to-housing attachment points feature openings by way of which the liquid is allowed to flow over and/or under the blade. The blades themselves can also be provided with one or more openings for optimizing the flow of water in the rotor. Providing the blades with openings has in some conditions a regulating effect in the right direction. In order to optimize the flow, the housing 4 may also be designed in a concave or convex shape. Here, as before, the concave or convex design may deviate by e.g. 1-10°, preferably 4-6°, from a flat plane.

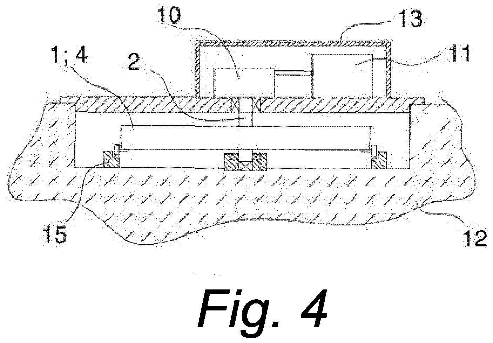

Fig. 4 shows a rotor 1 as mounted on a body 12 of the wave power plant. In this embodiment, the described rotor 1 comprises a housing 4 connected fixedly therewith and containing a liquid. Here, the rotor has its center axle 2 connected in a bearing-mounted fashion to the body 12 and coupled by way of a drive train 10 to a generator 11. In this embodiment, both the drive train 10 and the generator 11 are located in an engine room 13 on top of the body 12. The rotor's center axle 2 can be bearing-mounted on the body 12 of a wave power plant by using prior known bearing types, e.g. a ball bearing. In addition, the rotor 1 can have its outer rim supported with wheels on a circular track 15 because, in this embodiment, the center axle 2 is influenced by forces greater than those in prior art versions in which just the rotor rotates while the housing remains stationary. On the other hand, the flow resistances are here lesser than in the prior known embodiment in which the rotor rotates relative to the housing.

In case the rotor is adapted to be mounted on a wave power plant's vertical shaft for driving the same, the rotor may have, according to one embodiment, its hollow center axle provided with a groove which is matched for a tongue of the wave power plant's center shaft.

The rotor diameter depends on intended application, i.e. for example on how powerful is the swell present in a part of the sea where the wave power plant is to be employed. The larger the waves appearing, the larger is the rotor that can be employed. The rotor diameter of a wave power plant useful in Baltic Sea can be for example 5-10 m. The rotor height depends on intended application and on the rotor diameter. Preferably, the ratio of rotor height to its diameter is 1:5-1:25, in a particularly preferred case less than 1:10. It should be noted, however, that a shallower closed housing enables a more effective transfer of the entire amount of liquid over to one side of the center axle and thereby a more powerful rotation-influencing moment.

It is also conceivable that a wave power plant can be overlaid with two or more rotors of the invention coupled on top of each other. In this case, one rotor can be for example a rotor suitable for small waves with water as the liquid, and the other a rotor suitable for bigger waves with liquid clay slurry as the liquid.

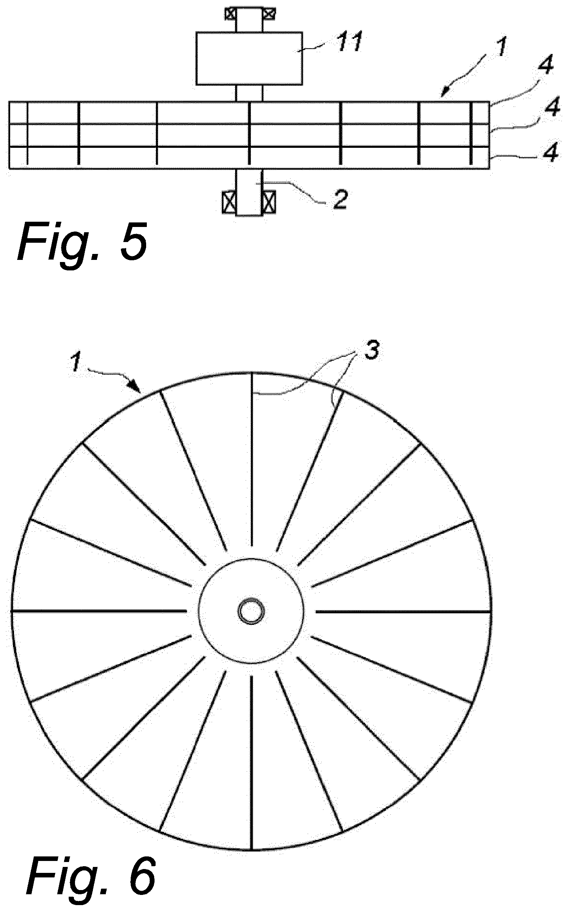

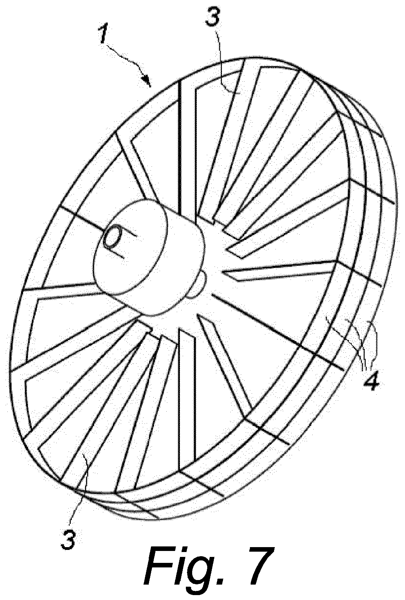

Such a multi-tiered rotor is depicted in figs. 6-8. There, the rotor 1 consists of three overlaid housings 4 in the shape of shallow cylinders. Each housing 4 is divided with radial blades 3 into compartments, the number of which in the present case is 16, i.e. the angle between blades 3 is 22,5 degrees. This closely spaced compartmentalization makes it possible that on the trailing side of inclination (with respect to rotating direction) almost the entire 180-degree sector can be full of liquid while the other side is empty.

In the embodiment of figs. 8 and 9, the blades 3 are provided with transverse fins 14, which protrude from the blades and extend in a direction opposite to the rotating direction. The outer edges or tips of the fins 14 are spaced from a surface of the adjacent blade 3 and the fins increase in length when progressing outward in radial direction. The fins 14 are only provided on one side of the blades 3. Thus, the plane of the fins lies transversely to the plane of the blades, whereby the fins restrict the flow of liquid in radial direction when the liquid is present in a position favorable with respect to the blade, i.e. works with its gravity perpendicularly towards the blade which advances "downhill" in the inclination direction of the wave power plant. The fins 14 are positioned at an acute angle relative to the blades 3, such that tips of the fins are closer to the center axle than butts of the fins. Therefore, the liquid is able to make an easy and rapid departure from between the blades when the blades are in a position where the gravity of liquid does not produce a rotor-driving moment. The fins 14 enable the liquid to be placed "as a whole" in such a sector of the rotor where the gravity of liquid builds up a moment in the right direction. In the described embodiment, the fins 14 are perpendicular to the plane of a neighboring blade 3, whereby said acute angle is equal to 90 degrees minus the angle between the blades, e.g. 60 degrees whenever the angle between the blades is 30 degrees (the number of blades is 12).

In all presented embodiments, the housing 4 is closed and sealed whenever the wave power plant is in operation.

In view of adjusting the flow of water inside the housing and the rotor, it is also conceivable that the rotor has its center axle provided also with descendible and ascendable barrier blades. The housing 4 may have a closable opening useful for adding or removing liquid.

In a device of the invention, it is the gravity of a liquid moving against the blades of a rotor which is utilized for generating rotational motion. The liquid is able to flow from between the blades around the center axle according to an inclination angle of the rotor and strives towards the side in the direction of which the device is in the process of inclining. This way, the device stabilizes itself in waves and is easy to activate.

## Claims

1. A wave power plant rotor, which is mountable for rotation around a float's vertical shaft or which has its vertical center axle rotatably bearing-mounted on the float, said rotor (1) comprising substantially vertical or inclined blades (3) arranged at peripheral intervals and having what in radial direction are their innermost edges spaced from a center axle (2) of the rotor (1), and the blades (3) have such an orientation that the rotor (1) is set in rotational motion by forces which are generated by the flow of liquid and/or the gravity of liquid in the rotor (1) and which are working perpendicularly towards the blades (3), as well as a housing (4) surrounding the rotor (1) and containing a liquid, the housing (4) being attached fixedly to the rotor (1) for enabling the housing (4) to rotate along with the rotor (1) and the blades (3), **characterized in that** commencing from the axle (2) of the rotor is power take-off to a generator (11).

2. A rotor according to claim 1, **characterized in that** the vertical or inclined blades (3) have a radial orientation.

3. A rotor according to claim 1, **characterized in that** the vertical or inclined blades (3) are arranged at regular intervals.

4. A rotor according to any of the preceding claims, **characterized in that** the blades (3) are arranged at an angle relative to radial direction or at an inclination relative to vertical plane.

5. A rotor according to any of the preceding claims, **characterized in that** the blades (3) are curvilinear in terms of the edges or cross-sections thereof.

6. A rotor according to any of the preceding claims, **characterized in that** the blades (3) are provided with openings.

7. A rotor according to any of the preceding claims, **characterized in that** the rotor (1) has its center axle (2) provided in a movable fashion with at least one additional blade.

8. A rotor according to any of the preceding claims, **characterized in that** the housing (4) is cylinder-shaped.

9. A rotor according to any of the preceding claims, **characterized in that** a bottom of the housing (4) is convex or concave.

10. A rotor according to any of the preceding claims, **characterized in that** the liquid is water or glycol or liquid slurry of clay or peat.

11. A rotor according to any of the preceding claims, **characterized in that** the rotor (1) has the ratio of its height h to its diameter D in the range of 1:5-1:25, preferably less than 1:10.

12. A rotor according to any of the preceding claims, **characterized in that** the liquid fills not more than 50%, most preferably 35-45%, of the housing's (4) volume.

13. A rotor according to any of the preceding claims, **characterized in that** the blades (3) are provided with transverse fins (14), which protrude from the blades and extend in a direction opposite to the rotating direction.

## Patentansprüche

1. Wellenkraftwerkrotor, der zur Rotation um ein vertikale Welle eines Schwimmkörpers montierbar ist oder dessen vertikale Mittelachse rotierbar an dem Schwimmkörper gelagert ist, wobei der Rotor (1) im Wesentlichen vertikale oder schräge Schaufeln (3) umfasst, die in umlaufenden Abständen angeordnet sind und in radialer Richtung ihre innersten Kanten aufweisen, die von einer Mittelachse (2) des Rotors (1) beabstandet sind, und die Schaufeln (3) eine derartige Ausrichtung aufweisen, dass der Rotor (1) in Rotationsbewegung durch Kräfte versetzt wird, die durch den Strom von Flüssigkeit und/oder die Schwerkraft von Flüssigkeit in dem Rotor (1) erzeugt werden und die senkrecht zu den Schaufeln (3) hin arbeiten, sowie ein Gehäuse (4), das den Rotor (1) umgibt und eine Flüssigkeit enthält, wobei das Gehäuse (4) fest an den Rotor (1) angebracht ist, um dem Gehäuse (4) zu ermöglichen, zusammen mit dem Rotor (1) und den Schaufeln (3) zu rotieren, **dadurch gekennzeichnet, dass** bei der Achse (2) des Rotors eine Kraftübertragung zu einem Generator (11) beginnt.

2. Rotor nach Anspruch 1, **dadurch gekennzeichnet, dass** die vertikalen oder schrägen Schaufeln (3) eine radiale Ausrichtung aufweisen.

3. Rotor nach Anspruch 1, **dadurch gekennzeichnet, dass** die vertikalen oder schrägen Schaufeln (3) in regelmäßigen Abständen angeordnet sind.

4. Rotor nach einem der vorhergehenden Ansprüche, **dadurch gekennzeichnet, dass** die Schaufeln (3) in einem Winkel bezüglich der radialen Richtung oder in einer Schrägstellung bezüglich der vertikalen Ebene angeordnet sind.

5. Rotor nach einem der vorhergehenden Ansprüche, **dadurch gekennzeichnet, dass** die Schaufeln (3) hinsichtlich der Kanten oder deren Querschnitten kurvenförmig sind.

6. Rotor nach einem der vorhergehenden Ansprüche, **dadurch gekennzeichnet, dass** die Schaufeln (3) mit Öffnungen versehen sind.

7. Rotor nach einem der vorhergehenden Ansprüche, **dadurch gekennzeichnet, dass** die Mittelachse (2) des Rotors (1) auf eine bewegbare Weise mit mindestens einer zusätzlichen Schaufel versehen ist.

8. Rotor nach einem der vorhergehenden Ansprüche, **dadurch gekennzeichnet, dass** das Gehäuse (4) zylinderförmig ist.

9. Rotor nach einem der vorhergehenden Ansprüche, **dadurch gekennzeichnet, dass** ein Boden des Gehäuses (4) konvex oder konkav ist.

10. Rotor nach einem der vorhergehenden Ansprüche, **dadurch gekennzeichnet, dass** die Flüssigkeit Wasser oder Glykol oder flüssiger Schlamm von Lehm oder Torf ist.

11. Rotor nach einem der vorhergehenden Ansprüche, **dadurch gekennzeichnet, dass** der Rotor (1) das Verhältnis von seiner Höhe h zu seinem Durchmesser D im Bereich von 1:5-1:25, vorzugsweise weniger als 1:10, aufweist.

12. Rotor nach einem der vorhergehenden Ansprüche, **dadurch gekennzeichnet, dass** die Flüssigkeit nicht mehr als 50 %, am bevorzugtesten 35-45 %, des Volumens des Gehäuses (4) füllt.

13. Rotor nach einem der vorhergehenden Ansprüche, **dadurch gekennzeichnet, dass** die Schaufeln (3) mit querlaufenden Lamellen (14) versehen sind, die von den Schaufeln vorstehen und sich in einer zur Rotationsrichtung entgegengesetzten Richtung erstrecken.

## Revendications

1. Rotor d'installation houlomotrice qui peut être monté pour la rotation sur un arbre vertical de flotteur ou qui a son axe central vertical monté sur paliers en rotation sur le flotteur, ledit rotor (1) comprenant des pales essentiellement verticales ou inclinées (3) agencées à des intervalles périphériques et ayant cela en direction radiale sur leurs bords les plus intérieurs espacés d'un axe central (2) du rotor (1), et les pales (3) ont une orientation telle que le rotor (1) est mis en rotation par des forces qui sont générées par l'écoulement de liquide et/ou la gravité du liquide dans le rotor (1) et qui travaillent perpendiculairement en direction des pales (3), ainsi qu'un logement (4) entourant le rotor (1) et contenant un liquide, le logement (4) étant fixé au rotor (1) pour permettre au logement (4) de tourner conjointement avec le rotor (1) et les pales (3), **caractérisé en ce qu'**en partant de l'axe (2) du rotor, il y a la prise de force vers un générateur (11).

2. Rotor selon la revendication 1, **caractérisé en ce que** les pales (3) verticales ou inclinées ont une orientation radiale.

3. Rotor selon la revendication 1, **caractérisé en ce que** les pales (3) verticales ou inclinées sont agencées à intervalles réguliers.

4. Rotor selon l'une quelconque des revendications précédentes, **caractérisé en ce que** les pales (3) sont agencées à un angle par rapport à la direction radiale ou à une inclinaison par rapport au plan vertical.

5. Rotor selon l'une quelconque des revendications précédentes, **caractérisé en ce que** les pales (3) sont curvilignes en termes des bords ou des sections transversales de celles-ci.

6. Rotor selon l'une quelconque des revendications précédentes, **caractérisé en ce que** les pales (3) sont dotées d'ouvertures.

7. Rotor selon l'une quelconque des revendications précédentes, **caractérisé en ce que** le rotor (1) a son axe central (2) prévu de façon mobile avec au moins une pale supplémentaire.

8. Rotor selon l'une quelconque des revendications précédentes, **caractérisé en ce que** le logement (4) est en forme de cylindre.

9. Rotor selon l'une quelconque des revendications précédentes, **caractérisé en ce qu'**un fond du logement (4) est convexe ou concave.

10. Rotor selon l'une quelconque des revendications précédentes, **caractérisé en ce que** le liquide est de l'eau ou du glycol ou une boue liquide d'argile ou de tourbe.

11. Rotor selon l'une quelconque des revendications précédentes, **caractérisé en ce que** le rotor (1) a un rapport de sa hauteur h à son diamètre D dans la plage de 1:5-1:25, de préférence inférieur à 1:10.

12. Rotor selon l'une quelconque des revendications précédentes, **caractérisé en ce que** le liquide ne remplit pas plus de 50 %, de manière plus préférée 35-45 % du volume du logement (4).

13. Rotor selon l'une quelconque des revendications précédentes, **caractérisé en ce que** les pales (3) sont dotées d'ailettes transversales (14) qui font saillie des pales et s'étendent dans une direction opposée à la direction de rotation.
